Europäisches Patentamt

(19) European Patent Office

Office européen des brevets

(11) Numéro de publication: **0 214 878**
**B1**

(12) **FASCICULE DE BREVET EUROPÉEN**

(45) Date de publication du fascicule du brevet:
12.07.89

(51) Int. Cl.⁴: **G 11 B 5/66**

(21) Numéro de dépôt: **86401561.5**

(22) Date de dépôt: **11.07.86**

(54) **Support d'enregistrement perpendiculaire magnétiquement anisotrope.**

(30) Priorité: **15.07.85 FR 8510791**

(43) Date de publication de la demande:
**18.03.87 Bulletin 87/12**

(45) Mention de la délivrance du brevet:
**12.07.89 Bulletin 89/28**

(84) Etats contractants désignés:
**DE FR GB IT NL**

(56) Documents cité:
**EP-A-0 145 446**
**DE-A-3 212 907**
**FR-A-1 358 761**

**PATENTS ABSTRACTS OF JAPAN, vol. 8, no. 27 (P-252) 1464 , 4 février 1984; & JP-A-58 182 129 (TOKYO DENKI KAGAKU KOGYO K.K.) 25-10-1983**
**PATENTS ABSTRACTS OF JAPAN, vol. 6, no. 156 (P-135) 1034 , 17 août 1982; & JP-A-57 74 827 (DAINIPPON INSATSU K.K.) 11-05-1982**

(73) Titulaire: **BULL S.A., 121, avenue de Malakoff, F-75764 Paris Cédex 16 (FR)**

(72) Inventeur: **Bouchand, Jean- Claude, 8, avenue de Crèpieres, F-78650 Beynes (FR)**
Inventeur: **Desserre, Jacques, 12 bis rue de la Mairie, F-Orcemont 78120 Rambouillet (FR)**
Inventeur: **Jeanniot, Dominique, 4, allée des Erables Appartement 80, F-92000 Nanterre (FR)**

(74) Mandataire: **Gouesmel, Daniel, BULL S.A. Industrial Property Department 25 avenue de la Grande- Armée GA- 4X018, F-75016 Paris (FR)**

## Description

La présente invention concerne un support d'enregistrement perpendiculaire magnétiquement anisotrope. Elle est plus particulièrement applicable à l'enregistrement perpendiculaire à hautes densités linéique et radiale sur les disques magnétiques des mémoires à disques.

On sait que les informations enregistrées sur les disques magnétiques sont contenues à l'intérieur de pistes concentriques circulaires et se présentent sous la forme d'une succession de petites cellules magnétiques dites élémentaires réparties sur toute la longueur de chaque piste.

Dans l'enregistrement sur disques magnétiques, la tendance actuelle est de chercher à obtenir des densités radiales de quelques milliers de pistes par centimètres (mesurées suivant le diamètre des disques) et des densités linéiques égales ou supérieures à dix mille changements de sens d'aimantation par centimètre (mesurées suivant la circonférence des pistes).

Un mode préféré d'écriture d'informations permettant l'obtention de telles densités d'enregistrement est le mode dit perpendiculaire où l'aimantation dans les cellules élémentaires est perpendiculaire à la couche magnétique d'enregistrement du disque. Dans ce mode, le milieu magnétique constituant la couche est un milieu magnétiquement anisotrope présentant une direction privilégiée d'aimantation appelée encore direction de facile aimantation, perpendiculaire à la couche d'enregistrement.

D'une manière générale, le disque (support d'enregistrement) est donc constitué d'un substrat amagnétique sur lequel est déposé le milieu magnétique d'enregistrement perpendiculaire dont l'épaisseur est faible, voisine du micromètre. Sur ce milieu magnétique, on dépose généralement une couche de protection amagnétique visant à assurer une protection mécanique pour ce milieu et à éviter toute corrosion ou oxydation.

Le milieu magnétique d'enregistrement perpendiculaire est généralement constitué par un alliage comportant au moins deux éléments simples, par exemple du chrome et du cobalt, du fer et du terbium, du fer, du terbium et du gadolinium.

Les qualités minimales requises pour les milieux d'enregistrement perpendiculaires sont liées au champ coercitif et à la rectangularité du cycle d'hystérésis représentatif de ce milieu selon la direction de facile aimantation. Le champ coercitif $H_c$ selon cette direction doit être suffisamment élevé pour éviter toute perturbation de l'information écrite sur le disque par des champs magnétiques parasites. En même temps, le champ coercitif ne doit pas être trop élevé, pour qu'il soit possible d'écrire des informations en renversant le sens de l'aimantation dans des cellules élémentaires voisines au moyen du champ magnétique d'écriture. Ce dernier est généré par un transducteur magnétique d'écriture qui est associé au disque magnétique. Dans les conditions définies ci-dessus, la valeur du champ coercitif est, dans la pratique, de l'ordre de quelques centaines d'oersteds. (1 oersted = 10 3/4 π Tesla). Il faut remarquer de plus que, pour les hautes densités d'informations, le signal de lecture généré par les transducteurs magnétiques de lecture de ces informations est proportionnel au champ magnétique coercitif $H_c$.

Par ailleurs, la forme idéale du cycle d'hystérésis d'un milieu magnétique d'enregistrement perpendiculaire est le rectangle (voir à ce sujet la thèse de Dominique JEANNIOT, présentée à l'université Pierre et Marie Curie le 21 Novembre 1983, sous le titre "Préparation et caractérisation de couches minces anisotropes de Co Cr et de a-FeTbGd pour enregistrement magnétique perpendiculaire"). En effet, ainsi l'aimantation rémanente reste elevée en étant la plus proche possible de l'aimantation de saturation.

Parmi les matériaux métalliques préférablement utilisés pour constituer des milieux d'enregistrement magnétique perpendiculaire, on compte les alliages de chrome - cobalt comprenant 15 à 20 % de chrome et 80 à 85 % de cobalt.

Les propriétés de cet alliage de chrome - cobalt (CoCr) sont désormais bien connues, car elles ont fait l'objet de nombreuses études mentionnées dans la thèse précédemment citée, notamment aux pages 41, 42, 43, 128.

Les milieux d'enregistrement magnétiques perpendiculaires en CoCr sont obtenus notamment par pulvérisation cathodique diode radiofréquence effectuée sous pression partielle d'Argon à des températures de l'ordre de 250 à 300 degrés. Des explications sur la pulvérisation cathodique radiofréquence sont données dans la thèse citée ci-dessus, en annexe I, aux pages 133 à 151.

On connaît déjà de tels milieux d'enregistrement. Ils sont par exemple décrits dans la demande de brevet européen EP-A-0 145 446 déposée par la Société Japonaise MATSUSHITA, ainsi que dans le brevet français 2.428.886 (demande de brevet 78.17641) déposé le 13 juin 1978 par la Compagnie Internationale pour l'Informatique CII HONEYWELL BULL. Les milieux d'enregistrement magnétiques perpendiculaires décrits dans les deux documents précédents comprennent un substrat sur lequel est déposé un empilement alterné de couches magnétiques métalliques et amagnétiques, ces couches magnétiques étant par exemple réalisées en permalloy (alliage de fer et de nickel et éventuellement de chrome). Cet empilement alterné de couches magnétiques et amagnétiques forment un milieu magnétique de fermeture de flux magnétique. La couche d'enregistrement perpendiculaire proprement dite réalisée en chrome-cobalt (CoCr) est déposée sur l'empilement de couches magnétiques et amagnétiques. La présence de ce milieu magnétique de fermeture de flux permet de concentrer les champs d'écriture et, par conséquent, d'obtenir des densités d'enregistrement élevées d'une part, et permet d'autre part une lecture plus aisée avec un meilleur rapport signal/bruit.

On a pu constater experimentalement que, à partir d'une certaine épaisseur du milieu d'enregistrement en CoCr, de l'ordre de quelques centaines de nm à 1 μm milliers d'angströms à 1 micron, les propriétés d'anistropie magnétique de l'alliage en chrome - cobalt se détériorent: le champ coercitif diminue et le cycle d'hystérésis est moins rectangulaire. Cette détérioration des propriétés magnétiques de l'alliage en chrome - cobalt est d'autant plus importante que l'épaisseur du milieu magnétique croît. Elle est dûe au fait que le milieu magnétique en chrome - cobalt est sous contrainte: cela signifie qu'il existe à l'intérieur du milieu des tensions mécaniques internes qui tendent à déformer la couche. L'existence de ces tensions mécaniques internes (ou contraintes) est dûe par exemple à des différences de dilation se produisant entre le milieu magnétique d'enregistrement et le substrat après le dépôt du milieu magnétique sur ce dernier, différences de dilatation se produisant au moment du refroidissement du support d'enregistrement dans son ensemble. Cette modification des propriétés magnétiques du milieu d'enregistrement perpendiculaire entraînée par les contraintes est dûe à l'effet magnétostrictif, effet se produisant au niveau microscopique. On rappelle que l'effet magnétostrictif consiste en ce que, pour certains matériaux, l'existence de contraintes mécaniques entraîne une modification des propriétés magnétiques et que réciproquement l'application d'un champ magnétique à ces matériaux, provoque l'existence d'une contrainte mécanique. Lorsque comme indiqué ci-dessus, il détériore les propriétés d'anisotropie magnétique, l'effet magnétostrictif est dit effet magnétostrictif négatif.

La présente invention permet de remédier aux inconvénients induits par le support d'enregistrement magnétique selon l'art antérieur décrit ci-dessus, en minimisant les contraintes dans le milieu magnétique et de ce fait en améliorant les propriétés magnétiques.

Selon l'invention, le support d'enregistrement perpendiculaire comprenant un substrat amagnétique sur lequel est déposé un empilement de couches magnétiques métalliques et amagnétiques alternées, incluant un milieu magnétique d'enregistrement anisotrope dont la direction de facile aimantation est perpendiculaire à sa surface est caractérisé en ce que le miliue magnétique d'enregistrement est constitué par un empilement de couches magnétiques en alliage de chrome-cobalt à effet magnétostrictif négatif et amagnétiques alternées, l'épaisseur des couches magnétiques étant comprise entre 70 et 200 nanomètres, les couches amagnétiques ayant une épaisseur entre 15 et 25 nanomètres.

D'autres avantages de la présente invention apparaîtront à la lecture de la description suivante, donnée à titre d'exemple purement illustratif et nullement limitatif en se référant aux dessins annexés:

- la figure 1: qui montre un cycle d'hystérésis d'un matériau magnétique donnant l'évolution de l'aimantation (ou de l'induction) en fonction du champ magnétique appliqué au matériau, permet de mieux comprendre les paramètres qui définissent la rectangularité de ce cycle,
- la figure 2: composée des figures 2a à 2d rappelle comment est constitué un support d'enregistrement selon l'art antérieur,
- la figure 3: qui est une vue en coupe prise dans un plan normal au plan du support d'enregistrement, montre un tel support selon l'invention,
- la figure 4: est une courbe montrant l'évolution du champ coercitif du milieu magnétique faisant partie du support selon l'invention, en fonction du nombre de couches.

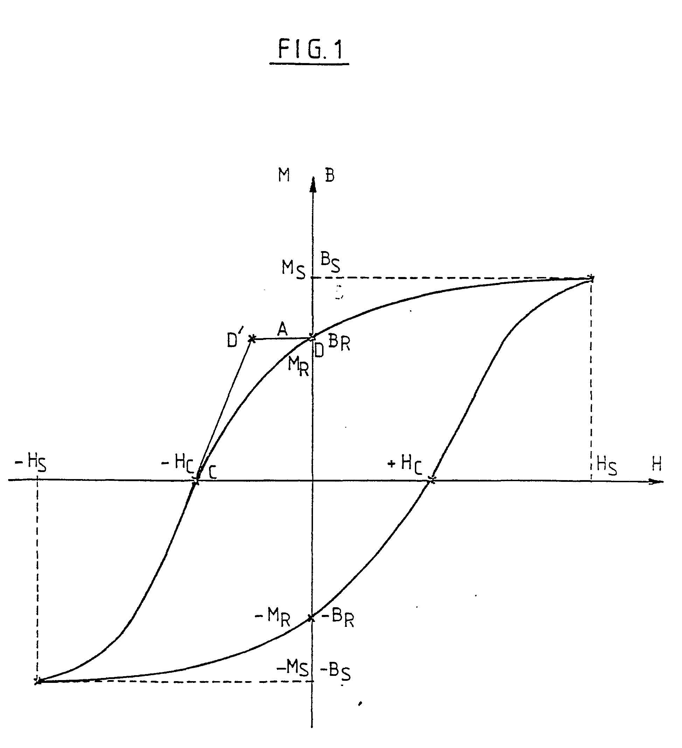

On considère la figure 1 montrant le cycle d'hystérésis M(H) ou B(H) d'un matériau magnétique qu'on peut supposer être un alliage de chrome - cobalt, magnétiquement anisotrope, ce cycle étant celui qui est mesuré selon la direction de facile aimantation de ce matériau, qui est supposée perpendiculaire à la surface de celui-ci.

$H_s$, $M_s$, $B_s$ désignent respectivement le champ magnétique de saturation, l'aimantation de saturation et l'induction de saturation.

Les quantités $M_R$ et $B_R$ désignent respectivement l'aimantation et l'induction rémanentes.

La quantité $H_c$ désigne le champ coercitif.

Si l'on mène au point C d'ordonnée M = 0 et d'abscisse $-H_c$ la tangente au cycle d'hystérésis, cette dernière rencontre au point D' la parallèle à l'axe des abscisses mené au point D d'abscisse H = 0 et d'ordonnée $+M_R$. On pose A = DD'.

Les deux quantités $S = M_R/M_S$ et $S^* = A/H_c$ définissent la rectangularité du cycle. Pour un cycle parfaitement rectangulaire, on aura donc:

$$S = S^* = 1$$

Il est entendu que, dans la suite de la description, toutes les quantités désignées ci-dessus ($H_c$, S, $S^*$, $M_r$, $M_s$, $B_r$, $B_s$, $H_s$) sont relatives aux propriétés magnétiques de tout matériau magnétique selon la direction de facile aimantation.

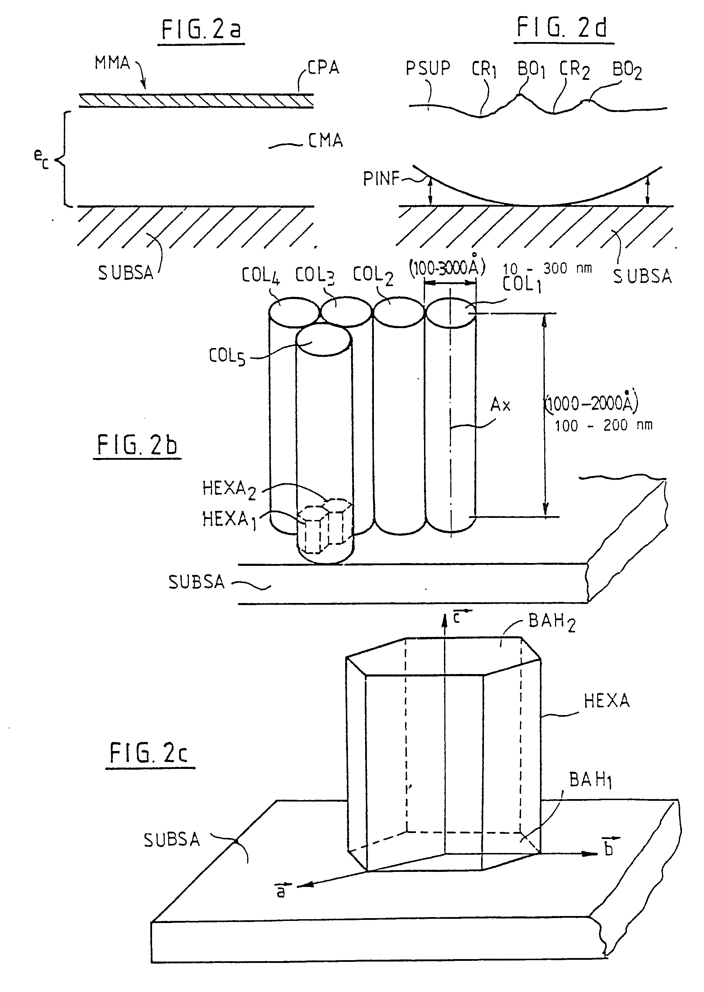

On considère la figure 2a qui montre, vu en coupe selon un plan perpendiculaire à la surface du support d'enregistrement, un tel support d'enregistrement perpendiculaire magnétiquement anisotrope selon l'art antérieur, à savoir MMA.

Ce support d'enregistrement comprend:

- un substrat SUBSA, par exemple, réalisé en verre,
- un milieu magnétique d'enregistrement, ou couche magnétique d'enregistrement CMA d'épaisseur $e_c$ de l'ordre de quelques centaines de nm à un μm environ (quelques milliers d'angströms à un micron environ).
- une couche de protection CPA, en matériau magnétique.

La couche magnétique CMA est supposée être réalisée de préférence en un alliage de chrome-cobalt tel que défini plus haut.

On observe que des matériaux magnétiques tel que le chrome- cobalt, de faible épaisseur, sont dans les conditions habituelles de dépôt de la pulvérisation cathodique radio fréquence sous vide, constitués de "grains" allongés d'orientation perpendiculaire au plan de la couche (et du substrat), ces grains pouvant être assimilés à des colonnes cylindriques dont l'axe de symétrie est perpendiculaire au plan du substrat. On montre que, pour que ces colonnes se forment, il faut que leur hauteur h mesurée perpendiculairement au plan du substrat SUBSA soit au minimum de 100 nm (1000 angströms) et que leur diamètre soit entre 10 et 300 nm (100 à 3000 angströms).

La figure 2b montre la disposition relative de quelques-unes de ces colonnes, à savoir 5 d'entre elles, qui sont dénommés respectivement $COL_1$, $COL_2$, $COL_3$, $COL_4$, $COL_5$. Pour simplifier le dessin, ces colonnes sont ici représentées tangentes les unes aux autres. Leur axe de symétrie perpendiculaire au plan du substrat SUBSA est Ax.

La structure cristallographique d'un alliage en chrome-cobalt est représentée à la figure 2c. C'est un polyèdre HEXA de base hexagonale, où les atomes de cobalt et de chrome viennent se placer au sommet de chacune des deux bases hexagonales $BAH_1$ et $BAH_2$. L'axe $\vec{c}$ de la maille hexagonale (vertical sur la figure 2c) est pratiquement normal au plan de la couche et au plan du substrat. Les axes des différentes mailles hexagonales et l'axe Ax des différentes colonnes sont donc pratiquement parallèles les uns aux autres.

A la figure 2b, on n'a représenté que deux mailles hexagonales $HEXA_1$ et $HEXA_2$ voisines l'une de l'autre s'insérant à l'intérieur de la colonne $COL_5$, mais il est bien évident qu'un nombre bien supérieur de mailles peuvent être contenus à l'intérieur d'une même colonne (quelques dizaines, voire quelques centaines et même davantage). Ceci permet de montrer comment les mailles hexagonales sont disposées à l'intérieur de chaque colonne. On voit donc que chaque colonne est constituée d'une pluralité de mailles hexagonale d'axe perpendiculaire au plan de la couche, mailles s'empilant les unes sur les autres. Il est bien évident qu'à la figure 2b, les échelles dimensionnelles ne sont pas respectées.

Ainsi qu'il a été indiqué plus haut, la couche magnétique CMA présente une anisotropie magnétique perpendiculaire. On associe à ce phénomène une énergie d'anisotropie uniaxiale $E_a$ et l'on montre que l'anisotropie magnétique a différentes origines, à savoir l'anisotropie d'origine magnétocristalline, l'anisotropie d'origine magnétostrictive et l'anisotropie de forme. Ces trois formes d'anisotropie sont précisées ci-dessous.

L'anisotropie magnétocristalline représente l'influence des axes cristallographiques tels que l'axe $\vec{c}$ représenté à la figure 2c. Dans le cas du chrome - cobalt, l'aimantation s'aligne préférentiellement le long des axes c. A cette anisotropie correspond une énergie Ek.

L'anisotropie de forme est dûe à la forme du matériau magnétique considéré. Ainsi, à partir d'une certaine épaisseur, des colonnes telles que les colonnes $COL_1$ à $COL_5$ représentées à la figure 2b, sont responsables de l'anisotropie de forme de la couche magnétique CMA en alliage de chrome - cobalt. A cette anisotropie correspond une énergie Ed.

Comme indiqué plus haut, les contraintes internes à la couche CMA induisent un effet magnétostrictif négatif dans celle-ci à laquelle correspond une énergie $E_s$ (avec $E_s < 0$).

On a donc:

$$Ea = Ek + Ed + Es$$

Ainsi, à partir d'une certaine épaisseur où les contraintes internes à la couche CMA deviennent relativement importantes, $E_s$ augmente, en valeur absolue, $E_a$ diminue et cela entraîne donc la diminution de la rectangularité du cycle, c'est-à-dire un affaiblissement des rapports S et S*, ainsi que la diminution du champ coercitif $H_c$. Ceci est extrêmement désavantageux lorsque l'on veut utiliser de telles couches magnétiques d'enregistrement pour l'écriture ou la lecture d'informations à très haute densité.

L'existence de contraintes internes à la couche a d'autres inconvénients, plus particulièrement illustrés à la figure 2d. On observe en effet, que la partieinférieure PINF du milieu magnétique CMA qui est en contact avec la surface du substrat SUBSA, peut se décoller de celui-ci, voire même, si l'adhérence entre le substrat et le milieu est grande, arracher une partie du substrat, quelque temps après le dépôt de la couche magnétique CMA sur ce substrat. Par ailleurs, l'état de surface de la partie supérieure PSUP de la couche CMA se dégrade lorsque l'épaisseur $e_c$ de la couche CMA croît. Cette partie PSUP présente alors une succession de creux $CRE_1$, $CRE_2$ et de bosses $BO_1$, $BO_2$, (ces creux et ces bosses étant bien entendu observés à l'échelle microscopique) qui peuvent gêner les opérations de lecture ou d'écriture des transducteurs magnétiques de lecture ou d'écriture.

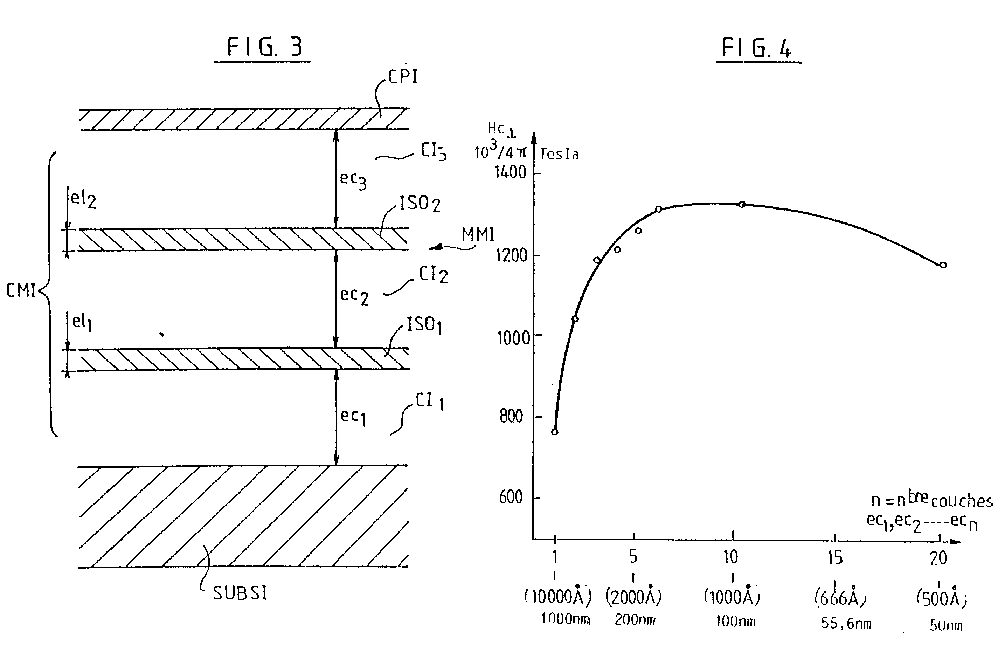

Le support magnétique selon l'invention MMI représenté à la figure 3 remédie aux inconvénients ci-dessus et permet d'améliorer très sensiblement les propriétés magnétiques de ce dernier par rapport au support magnétique selon l'art antérieur, ainsi qu'il sera démontré plus loin, en relation avec la figure 4.

Le support selon l'invention MMI est constitué par un empilement alterné de couches magnétiques et amagnétiques, disposé sur le substrat SUBSI. Les couches magnétiques sont désignées respectivement par $CI_1$, $CI_2$, ....., $CI_n$. A la figure 3, le nombre n a été choisi égal à 3. Les couches amagnétiques sont désignées respectivement par $ISO_1$, $ISO_2$, ..., $ISO_{n-1}$. Chaque couche amagnétique est disposée entre deux couches magnétiques. Ainsi la couche isolante $ISO_1$ est

disposée entre les deux couches magnétiques $CI_1$ et $CI_2$, la couche isolante $ISO_2$ étant disposée entre les couches magnétiques $CI_2$ et $CI_3$.

On désigne par CMI l'empilement multi-couches formé par l'ensemble des couches magnétiques $CI_1$ à $CI_n$ et l'ensemble des couches amagnétiques $ISO_1$ à $ISO_{n-1}$. Il est recouvert d'une couche de protection CPI, par exemple soit en oxyde de silicium $SiO_2$, soit en monooxyde de silicium, soit dans un mélange de ces deux oxydes. Le substrat SUBSI est par exemple identique au substrat SUBSA représenté à la figure 2.

Préférentiellement, les couches magnétiques sont constituées de chrome - cobalt CrCo ou de tout matériau métallique magnétique à effet magnétostrictif négatif et les couches amagnétiques sont constituées de la même manière que la couche de protection CPI, mais pourraient également être réalisées en alumine $Al_2O_3$.

Le support magnétique selon l'invention MMI doit répondre aux critères suivants:

-1. Les couches magnétiques $CI_1$ à $CI_n$ doivent conserver la structure cristalline hexagonale,
-2. Le matériau magnétique doit être formé de colonnes à axe de symétrie perpendiculaire au substrat, ainsi qu'il est montré à la figure 2b,
-3. Ainsi que rappelé plus haut, les propriétés d'anisotropie magnétique selon une direction normale au plan du support doivent être supérieures à celles du milieu magnétique selon l'art antérieur.

Ces différents critères sont respectés en optimisant les épaisseurs $ec_1$ à $ec_n$ des couches magnétiques et $el_1$ à $el_{n-1}$ des couches isolantes.

De préférence, on a $ec_1 = ec_2 = ... = ec_n = e_c$ d'une part et d'autre part $el_1 = ..... el_{n-1} = ei$. L'épaisseur el des couches amagnétiques est entre 15 et 25 nm, de manière à ce que celles-ci soient suffisamment élastiques et souples pour suivre les mouvements imposés par les contraintes à l'intérieur des couches magnétiques $CI_1$ à $CI_n$ et rendent meilleur leur état de surface en evitant sa déformation. Ainsi la présence de l'ensemble des couches amagnétiques en oxyde de silicium SiO permet d'amortir les contraintes à l'intérieur des couches magnétiques de chrome - cobalt.

Par ailleurs, l'épaisseur des couches amagnétiques indiquée ci-dessus est telle qu'elle permet un fort couplage magnétique entre les différentes couches magnétiques de chrome - cobalt.

L'épaisseur ec de chacune des couches magnétiques doit se situer entre une valeur minimum de l'ordre de 100 à 200 nm de manière à ce que des colonnes telles que celles montrées à la figure 2b puissent se former et une valeur maximum (de l'ordre du µm) au-delà de laquelle les colonnes se déforment. Dans l'un comme l'autre des deux cas, (valeur minimum d'une part, valeur maximum d'autre part) leur axe de symétrie n'est plus perpendiculaire au substrat, ce qui dégrade les propriétés d'anisotropie magnétique du milieu d'enregistrement (affaiblissement du champ coercitif et affaiblissement de la rectangularité du cycle).

Ainsi qu'on peut le voir à la figure 3, la première couche qui est déposée sur le substrat SUBSI est une couche magnétique en chrome - cobalt mais il est évident qu'on pourrait également déposer en premier sur le substrat SUBSI une sous couche souple soit en oxyde de silicium SiO, soit en dioxyde $SiO_2$, soit dans un mélange des deux, ou encore une sous-couche perméable magnétiquement par exemple en permalloy Ni - Fe, comme indiqué dans le brevet français 2.428.886, déposé le 13 Juin 1978 par la Compagnie Internationale pour l'Informatique Cii Honeywell Bull sous le titre "Support d'informations magnétique à enregistrement perpendiculaire".

De préférence, l'épaisseur totale ($ec_1 + ec_2 + .... + ec_n$) des différentes couches magnétiques est de l'ordre du µm.

On considère désormais la figure 4 qui montre l'évolution du champ coercitif $H_c$ mesuré en oersteds (10 3/4 π Tesla) selon l'axe de facile aimantation de la couche CMI, (ce dernier étant perpendiculaire au plan du substrat SUBSI et des différentes couches $CI_1$ à $CI_n$), en fonction du nombre n de couches magnétiques $CI_1$ avec $n \times ec = $ constante $= 1$ µm. On suppose également que l'épaisseur de chacune des couches isolantes $ISO_1$, ......, $ISO_{n-1}$ reste constante entre 15 et 25 nm, de manière à ce que le couplage magnétique entre les couches voisines reste sensiblement constant quel que soit le nombre n de couches. De même l'épaisseur du substrat SUBSI reste constante, quel que soit le nombre n.

Il est clair que la courbe représentée à la figure 4 représente également l'évolution du champ coercitif en fonction de l'épaisseur ec des couches, celle-ci allant en décroissant.

On voit que le champ coercitif croît en fonction du nombre n de couches magnétiques (et est donc d'autant plus important que l'épaisseur de celle-ci diminue), jusqu'à ce que le nombre de couches n soit égal à dix. Le champ coercitif décroît ensuite lorsque le nombre de couches devient supérieur à quinze environ, l'épaisseur de celles-ci devenant inférieure à environ 70 nm.

On observe une évolution tout à fait analogue des coefficients S et S* définissant la rectangularité du cycle d'hystérésis (selon la direction de facile aimantation) de la couche CMI en fonction du nombre de couches n. Ainsi, si le coefficient S est de l'ordre de 0,09 pour n = 1 (monocouche analogue à la couche CMA selon l'art antérieur) ce coefficient est de l'ordre de 0,20 pour n compris entre 5 et 15. De même, ce coefficient S diminue lorsque le nombre de couches devient supérieur à 15.

On voit donc que les meilleurs résultats (valeur maximum du champ coercitif $H_c$ et valeur maximum de S) sont obtenus pour un nombre de couches compris entre 5 et 15 et pour une épaisseur des couches comprise entre 70 et 200 nm. Ceci peut s'expliquer par le fait que, pour ces épaisseurs, les colonnes du type des colonnes COL$_1$ à COL$_5$ sont parfaitement formées et ont leur axe parfaitement perpendiculaire au plan du substrat SUBSI. Par ailleurs, pour ces mêmes épaisseurs, la structure cristalline hexagonale à axe $\vec{c}$ perpendiculaire au plan du substrat est conservée.

L'existence de couches amagnétiques souples et élastiques de faible épaisseur, du type des couches ISO$_1$ à ISO$_2$ montrées à la figure 3 présentent d'autres avantages à savoir, d'une part, le fait que la partie inférieure de la couche CMI en contact avec le substrat ne se décolle plus de celui-ci, en raison de la diminution des contraintes internes à la couche et d'autre part le fait que l'état de surface de la partie supérieure de la couche CMI (en contact avec la couche de protection CPI) est correct et meilleur que celui des couches CMA selon l'art antérieur (se référer à la figure 2d).

Un autre avantage de l'invention est de permettre le dépôt des couches magnétiques et amagnétiques sur le substrat SUBSI, par pulvérisation cathodique radio fréquence sous vide, avec des températures de dépôt beaucoup plus faibles que pour les milieux d'enregistrement appartenant au support d'enregistrement selon l'art antérieur.

## Revendications

1. Support d'enregistrement perpendiculaire comprenant un substrat amagnétique (SUBSI) sur lequel est déposé un empilement de couches magnétiques métalliques et amagnétiques alternées, incluant un milieu magnétique d'enregistrement magnétiquement anisotrope dont la direction de facile aimantation est perpendiculaire à sa surface, caractérisé en ce que le milieu magnétique d'enregistrement est constitué par un empilement de couches magnétiques en alliage de chrome-cobalt à effet magnétostrictif négatif (Cl$_1$ à Cl$_n$) et amagnétiques (ISO$_1$ à ISO$_{n-1}$) alternées, l'épaisseur des couches magnétiques étant comprise entre 70 et 200 nanomètres, les couches amagnétiques (ISO$_1$ à ISO$_{n-1}$) ayant une épaisseur entre 15 et 25 nanomètres.

2. Support d'enregistrement selon la revendication 1 caractérisé en ce que les couches amagnétiques (ISO$_1$ à ISO$_{n-1}$) alternées sont en monooxyde de silicium (SiO) ou dioxyde de silicium (SIO$_2$) ou un mélange des deux.

3. Support d'enregistrement selon l'une des revendications 1, 2, caractérisé en ce que le nombre n de couches magnétiques à effet magnétostrictif négatif est compris entre 5 et 15.

## Patentansprüche

1. Träger für eine senkrechte Aufzeichnung, mit einen unmagnetischen Substrat (SUBSI), auf welchen eine Schichtung aus alternierenden magnetischen Metallschichten und aus unmagnetischen Schichten aufgebracht wird, welche ein magnetisches Medium für eine magnetich anisotrope Aufzeichnung enthält, dessen Richtung der leichten Magnetisierung zu seiner Oberfläche senkrecht steht, dadurch gekennzeichnet, daß das magnetische Aufzeichnungsmedium aus einer Schichtung von alternierenden Magnetschichten aus einer Chrom-Kobalt-Legierung mit negativem magnetostriktiven Effekt (Cl1 bis Cln) und unmagnetischen Schichten (ISO$_1$ bis ISO$_{n-1}$) besteht, wobei die Dicke der magnetischen Schichten zwischen 70 und 200 Nanometer beträgt und die unmagnetischen Schichten (ISO$_1$ bis ISO$_{n-1}$) eine Dicke aufweisen, welche zwischen 15 und 25 Nanometer beträgt.

2 Aufzeichnungsträger nach Anspruch 1, dadurch gekennzeichnet, daß die alternierenden unmagnetischen Schichten (ISO$_1$ bis ISO$_{n-1}$) aus Siliziummonoxid (SiO), aus Siliziumdioxid (SiO$_2$) oder aus einer Mischung von beiden bestehen.

3. Aufzeichnungsträger nach den Ansprüchen 1 oder 2, dadurch gekennzeichnet, daß die Anzahl n der magnetischen Schichten mit negativem magnetorestriktiven Effekt zwischen 5 und 15 liegt.

## Claims

1. Perpendicular recording medium comprising a non-magnetic substrate (SUBSI) on which there is deposited a stack of magnetic metallic layers and non-magnetic layers alternately, including a magnetically anistropic magnetic recording medium, the direction of easy magnetization of which is perpendicular to its surface, characterized in that the magnetic recording medium is constituted by a stack of magnetic layers of a chromium-cobalt alloy with negative magnetostrictive effect (Cl$_1$ to Cl$_n$) and non-magnetic layers (ISO$_1$ to ISO$_{n-1}$) alternately, the thickness of the magnetic layers being comprised between 70 and 200 nanometres, the non-magnetic layers (ISO$_1$ to ISO$_{n-1}$) having a thickness between 15 and 25 nanometres.

2. Recording medium according claim 1, characterized in that the alternate non-magnetic layers (ISO$_1$ to ISO$_{n-1}$) are of silicon monoxide (SiO) or silicon dioxide (SIO$_2$) or a mixture of the two.

3. Recording medium according to one of claims 1, 2, characterized in that the number n of magnetic layers with negative magnetostrictive effect is comprised between 5 and 15.

## FIG. 1

## FIG. 2a

MMA
CPA
CMA
$e_c$
SUBSA

## FIG. 2d

PSUP   $CR_1$   $BO_1$   $CR_2$   $BO_2$
PINF
SUBSA

## FIG. 2b

$COL_4$   $COL_3$   $COL_2$   (100-3000Å)   10 – 300 nm   $COL_1$
$COL_5$
Ax   (1000–2000Å)   100 – 200 nm
$HEXA_2$
$HEXA_1$
SUBSA

## FIG. 2c

$\vec{c}$   $BAH_2$
HEXA
$BAH_1$
SUBSA
$\vec{a}$   $\vec{b}$

3

FIG. 3

FIG. 4

EP 0 214 878 B1